(19) **Europäisches Patentamt**

**European Patent Office**

**Office européen des brevets**

(11) **EP 0 741 672 B1**

(12) **FASCICULE DE BREVET EUROPEEN**

(45) Date de publication et mention
de la délivrance du brevet:
**02.11.2000 Bulletin 2000/44**

(51) Int. Cl.⁷: **C02F 9/00**

(21) Numéro de dépôt: **95907726.4**

(86) Numéro de dépôt international:
**PCT/FR95/00113**

(22) Date de dépôt: **01.02.1995**

(87) Numéro de publication internationale:
**WO 95/21136 (10.08.1995 Gazette 1995/34)**

(54) **PROCEDE D'EPURATION DE LISIER D'ANIMAL**

VERFAHREN ZUR REINIGUNG VON GÜLLE

METHOD FOR PURIFYING LIQUID MANURE

(84) Etats contractants désignés:
**AT BE CH DE DK ES FR GB IE IT LI NL SE**

(30) Priorité: **01.02.1994 FR 9401093**

(43) Date de publication de la demande:
**13.11.1996 Bulletin 1996/46**

(73) Titulaire: **RHODIA CHIMIE**
**92408 Courbevoie Cédex (FR)**

(72) Inventeurs:
 • **PESCHER, Yvette**
  **F-92220 Bagneux (FR)**
 • **RAES, Jean-Paul**
  **B-7090 Braine-le-Comte (BE)**
 • **DANDA, Sylvain**
  **F-95670 Marly-la-Ville (FR)**
 • **CASTELAS, Bernard**
  **F-69250 Montanay (FR)**
 • **RABATEL, François**
  **F-11510 Caves (FR)**
 • **MORALES, José**
  **F-66530 Olaira (FR)**
 • **BONFILL, Jean**
  **F-66530 Olaira (FR)**

(74) Mandataire: **Delenne, Marc et al**
**RHODIA SERVICES**
**Direction de la Propriété Industrielle**
**25, quai Paul Doumer**
**92408 Courbevoie Cédex (FR)**

(56) Documents cités:
**WO-A-92/11206          GB-A- 2 056 962**

 • **DATABASE WPI Week 7949, Derwent
  Publications Ltd., London, GB; AN 79-88476B &
  JP,A,54 139 258 (NIPPON PEROXIDE K. K. 19-10-
  79)**
 • **PATENT ABSTRACTS OF JAPAN vol. 13, no. 241
  (C-604) 6 Juin 1989 & JP,A,01 051 200 (MITSUO
  SAITO) 27 Février 1989**
 • **PATENT ABSTRACTS OF JAPAN vol. 6, no. 11
  (C-088) 22 Janvier 1982 & JP,A,56 136 694
  (DOUWA KOGYO K.K.) 26 Octobre 1981**

**Description**

La présente invention concerne un procédé d'épuration des lisiers d'animaux, notamment du lisier de porc.

Le traitement des déchets, notamment de type organique, en vue de leur élimination et/ou de leur valorisation est un besoin qui se fait de plus en plus ressentir dans le monde industriel et agricole d'aujourd'hui.

Ainsi, la production élévée d'eaux usées d'origine agricole, notamment de lisiers d'animaux, pose des problèmes de plus en plus importants à l'agriculture et aussi à la protection du milieu naturel, notamment des cours d'eau. Des règlements de plus en plus sévères sont mis en place afin d'éviter les effets très négatifs de la pollution des cours d'eau due aux divers lisiers d'animaux.

Un certain nombre de procédés de traitement a été proposé.

Il est connu de traiter les lisiers d'animaux par fermentation biologique aérobie pour assurer l'oxydation des combinaisons sulfurées nauséabondes.

Il est également connu de traiter les déchets fermentescibles et nauséabonds à l'aide d'agents oxydants.

Il a déjà été proposé de stériliser les gadoues des villes à l'aide de gaz contenant des gaz nitreux.

De même, la possibilité de détruire les composés putrides contenus dans les ordures ménagères au moyen de gaz renfermant des oxydes d'azote a été mentionnée dans le passé.

Néanmoins, ces procédés d'épuration de milieu (ou effluent) contenant des déchets organiques ne donnent pas des résultats entièrement satisfaisants, du point de vue technique et même économique.

C'est le cas en particulier des traitements d'épuration des lisiers d'animaux dans des installations d'oxydation totale classiques.

De même, le séchage de purin entier par évaporation de l'eau qu'il contient n'est pas économiquement valable et engendre une pollution de l'air et une gène pour l'odorat.

Les procédés connus d'épuration de milieu (ou effluent) contenant des déchets organiques présentent aussi l'inconvénient de ne pas traiter la totalité de ces déchets, mais seulement ceux d'une certaine espèce. De plus, certains déchets ne sont pas valorisés.

La présente invention se propose notamment de résoudre les inconvénients sus-mentionnés.

Dans ce but, la présente invention propose de fournir un procédé d'épuration d'un lisier d'animal, dans lequel ledit lisier est soumis à une combinaison de traitements chimiques, physiques ou physico-chimiques particuliers, tous les déchets organiques contenus dans ce lisier étant traités et, de manière préférée, aucun déchet non valorisé ne subsistant à l'issue du procédé, procédé dont la mise en oeuvre est simple et économique.

De plus, le rejet dans le milieu naturel (cours d'eau, irrigation...) de la partie aqueuse des effluents traités selon la présente invention devient possible car elle est avantageusement inodore, limpide, stérile et relativement pauvre en DBO (demande biologique d'oxygène) et DCO (demande chimique d'oxygène).

Enfin, le procédé selon la présente invention permet l'obtention, dans le cas du traitement de lisiers d'animaux (en particulier le lisier de porc), de boues directement épandables, c'est-à-dire directement utilisables comme amendement agricole sans qu'il soit nécessaire d'y ajouter des adjuvants fertilisants.

Ainsi, le principal objet de l'invention est un procédé caractérisé en ce qu'il comprend un traitement d'oxydation (en particulier de type chimique), un traitement de coagulation, un traitement à l'aide d'un polyélectrolyte (en particulier du type anionique ou cationique), une filtration et une ultrafiltration. pour épurer, des lisiers d'animaux, en particulier d'animaux du type bovin, ovin ou porcin, ou de volailles (mentionnés déchets organiques ci-dessous).

D'autres buts, détails et avantages de l'invention seront mieux compris à la lecture de la description qui va suivre.

Le procédé selon la présente invention se caractérise comme defini dans la revendication 1.

Selon l'invention, l'étape (i) est effectuée avant ou simultanément à l'étape (ii) et l'étape (ii) est effectuée avant ou simultanément à l'étape (iii).

Selon un premier mode de réalisation de l'invention, les étapes (i) et (ii) sont effectuées simultanément : le milieu (ou effluent) contenant les déchets organiques est ainsi d'abord traité simultanément par au moins un agent oxydant et au moins un agent coagulant ; l'effluent obtenu à l'issue de ce traitement simultané est ensuite soumis à l'étape (iii), c'est-à-dire traité par au moins un polyélectrolyte ; l'effluent obtenu à l'issue de l'étape (iii) est enfin soumis à l'étape (iv) de filtration, ce en quoi on obtient un gâteau de filtration et un filtrat.

Selon un deuxième mode de réalisation de l'invention, les étapes (ii) et (iii) sont effectuées simultanément : le milieu (ou effluent) contenant les déchets organiques est ainsi d'abord traité par au moins un agent oxydant (étape (i)) ; l'effluent obtenu à l'issue de l'étape (i) est alors traité simultanément par au moins un agent coagulant et au moins un polyélectrolyte ; l'effluent obtenu à l'issue de ce traitement simultané est enfin soumis à l'étape (iv) de filtration, ce en quoi on obtient un gâteau de filtration et un filtrat.

Selon un troisième mode de réalisation de l'invention, les étapes (i), (ii) et (iii) sont effectuées simultanément : le milieu (ou effluent) contenant les déchets organiques est ainsi traité simultanément par au moins un agent oxydant, au moins un agent coagulant et au moins un polyélectrolyte ; l'effluent obtenu à l'issue de ce traitement simultané est ensuite soumis à l'étape (iv) de filtration, ce en quoi on obtient un gâteau de filtration et un filtrat.

Selon un quatrième mode de réalisation de l'invention, les étapes (i), (ii) et (iii) sont effectuées séparément les unes des autres : le procédé selon l'invention comprend alors les étapes successives suivantes :

(i) on traite ledit milieu à l'aide d'au moins un agent oxydant ;
(ii) on traite l'effluent obtenu à l'issue de l'étape (i) à l'aide d'au moins un agent coagulant ;
(iii) on traite l'effluent obtenu à l'issue de l'étape (ii) à l'aide d'au moins un polyélectrolyte ;
(iv) on soumet l'effluent obtenu à l'issue de l'étape (iii) à une filtration, ce en quoi on obtient un gâteau de filtration et un filtrat.

(i).

Le filtrat obtenu à l'issue de l'étape (iv) est soumis à une ultrafiltration, ce en quoi on obtient un rétentat (ou concentrat) et un ultrafiltrat (ou perméat).

Le rétentat est, de préférence, recyclé vers l'étape (i).

Chacun des traitements ou étapes du procédé selon l'invention va maintenant être décrit plus précisément.

Tout type d'agent oxydant (de préférence chimique) peut être employé dans l'étape (i).

De manière préférée (mais non limitative), l'agent oxydant utilisé est choisi dans le groupe formé par l'oxygène, les dérivés oxygénés (par exemple l'eau oxygénée, l'ozone), le chlore, les dérivés chlorés (par exemple le dioxyde de chlore, l'hypochlorite de sodium, l'hypochlorite de calcium, l'hypochlorite de potassium, le chlorite de sodium, le chlorate de sodium, l'eau de javel), le permanganate de potassium.

On peut employer un mélange d'agents oxydants.

La quantité d'agent oxydant employé dans l'étape (i) est comprise, en général, entre 0,1 et 50 litres, de préférence entre 0,5 et 10 litres, par $m^3$ de déchets organiques (présents dans le milieu initial à traiter).

On utilisera avantageusement l'eau de javel comme agent oxydant ; la quantité d'eau de javel alors employée dans l'étape (i) est alors généralement comprise entre 0,1 et 5 litres, de préférence entre 0,5 et 1 litre, par $m^3$ de déchets organiques (présents dans le milieu initial à traiter).

L'étape (i) peut être effectuée sous agitation.

La Demanderesse a constaté que le traitement effectué lors de l'étape (i) permettait notamment l'oxydation des fins colloïdes hydrophiles et l'élimination des composés sulfureux, notamment de l'hydrogène sulfuré ($H_2S$), éventuellement présents dans le milieu à traiter.

De plus, il permet d'obtenir un milieu (ou effluent) qui est, au moins en grande partie, désinfecté et désodorisé.

L'étape (ii) est un traitement de coagulation effectué à l'aide d'au moins un agent coagulant, de préférence minéral.

L'agent coagulant utilisé peut être du type cationique.

De manière préférée (mais non limitative), l'agent coagulant du type cationique susceptible d'être utilisé est un sel de fer, un sel d'aluminium ou un sel de magnésium.

Ce sel de fer peut répondre à la formule (1) suivante :

$$Fe_2Cl_x(SO_4)_y \qquad (1)$$

dans laquelle $0 \le x \le 6$, $0 \le y \le 3$ et $x + 2y = 6$

De même, ce sel d'aluminium peut répondre à la formule (2) suivante :

$$Al_2(OH)_aCl_b(SO_4)_c \qquad (2)$$

dans laquelle $0 \le a \le 5$, $0 \le b \le 6$, $0 \le c \le 3$ et $a + b + 2c = 6$

L'agent coagulant du type cationique peut être choisi dans le groupe formé par le chlorure ferreux, le sulfate ferreux, le chlorure ferrique, le sulfate ferrique, le chlorosulfate ferrique, les sulfates d'aluminium, les chlorosulfates d'aluminium basiques, le chlorure de magnésium, le sulfate de magnésium.

On peut employer un mélange d'agents coagulants du type cationique.

L'agent coagulant utilisé peut être du type anionique.

De manière préférée (mais non limitative), l'agent coagulant du type anionique susceptible d'être utilisé est l'aluminate de sodium ou l'aluminate de calcium.

On peut employer un mélange d'agents coagulants du type anionique.

La quantité d'agent coagulant employé dans l'étape (ii) est comprise, en général, entre 1 et 20 kg, de préférence entre 2 et 10 kg par $m^3$ de déchets organiques (présents dans le milieu initial à traiter).

L'étape (ii) est, de préférence, effectuée sous agitation.

L'agent coagulant doit être habituellement choisi de manière telle que sa mise en oeuvre n'engendre pas de décarbonatation due à la destruction des carbonates et hydrogénocarbonates éventuellement présents dans l'effluent à traiter ; il suffit généralement que la valeur du pH du milieu réactionnel ne descende pas en-dessous de celle du pH de déstabilisation des carbonates et hydrogénocarbonates.

Lors de l'étape (ii), l'agent coagulant, lorsqu'il est du type cationique, peut être utilisé en présence également d'au moins un polyélectrolyte du type cationique.

Les polyélectrolytes du type cationique susceptibles d'être employés dans la présente invention sont notamment :

- les polyamines neutres et les polyamines quaternaires ; plus précisement on peut citer les polyalkylèneamines et les polyhydroxyalkylèneamines, neutres ou quaternaires ; conviennent particulièrement les homopolymères suivants : le polyéthylèneamine, le polychlorure d'hydroxy-2-propyl-1-N-méthylammonium, le polychlorure d'hydroxy-2-propyl-1-,1-N-dimethylammonium, le polyhydrogénosulfate de vinyl-2-imidazolinium et le polychlorure de diallyl-diméthyl-ammonium ; on peut également citer le copolymère formé par l'acylamide et le chlorure de diallyl-diméthyl-ammonium ;
- les polyaminoacrylates et les polyaminométhacrylates, et plus précisement les polydialkylaminoalkylacrylates et les polydialkylaminoalkylméthacrylates ; à titre d'exemple, le poly-N,N-diméthylaminoéthylméthacrylate, neutre ou quaternaire, convient bien, que ce soit sous la forme de l'homopolymère ou d'un copolymère avec l'acrylamide ;
- les polyaminoacrylamides et les polyaminométhacrylamides, et plus précisément les polydialkylaminoalkyl acrylamides ou méthacrylamides ; à titre d'exemples, on peut citer les poly-N-diméthylaminopropylméthacrylamides et les poly-N-diméthylaminoéthylacrylamides.

On peut utiliser un mélange de polyélectrolytes du type cationique.

La quantité en poids de polyélectrolyte du type cationique susceptible d'être employé dans l'étape (ii), lorsque l'agent coagulant est du type cationique, représente, en général, 0,1 à 5 %, de préférence 0,1 à 1 %, de la quantité en poids d'agent coagulant (du type cationique) employée dans cette étape.

Le traitement de coagulation permet notamment d'abaisser la quantité de colloïdes encore présents.

De plus, la Demanderesse a constaté que cette étape conduisait à la précipitation des composés à base de phosphates et ceux à base de phosphore et généralement de composés azotés protéiniques, et, également, à une diminution de la DBO et da la DCO.

L'étape (iii) est un traitement à l'aide d'au moins un polyélectrolyte.

Notamment lorsque l'agent de coagulation utilisé dans l'étape (ii) est du type cationique ou du type anionique, le polyélectrolyte employé dans l'étape (iii) est avantageusement un polyélectrolyte du type anionique.

De manière préférée (mais non limitative), le polyélectrolyte du type anionique susceptible d'être employé est un polyacrylamide anionique, un polyacrylate, un polyméthacrylate, un polycarboxylate, un polysaccharide (par exemple la gomme xanthane, la gomme guar, l'alginate) ou le chitosan.

On peut employer un mélange de polyélectrolytes du type anionique.

Lorsque l'agent de coagulation utilisé dans l'étape (ii) est du type anionique, le polyélectrolyte employé dans l'étape (iii) peut être aussi un polyélectrolyte du type cationique.

On peut alors utiliser un polyélectrolyte du type cationique tel que décrit précédemment.

La quantité de polyélectrolyte employée dans l'étape (iii) est comprise, en général, entre 1 et 100 grammes, de préférence entre 2 et 20 grammes, exprimée en poids de polyélectrolyte sec, par $m^3$ de déchets organiques (présents dans le milieu initial à traiter).

L'étape (iii) peut être effectuée sous agitation.

La Demanderesse a notamment constaté que, grâce à l'élimination des colloïdes, notamment des fins colloïdes hydrophiles, et des composés sulfureux, notamment de l'hydrogène sulfuré, l'effluent obtenu à l'issue de cette étape (iii) était essentiellement formé d'une boue directement déshydratable, via une filtration, et complètement désodorisée.

On soumet ensuite l'effluent obtenu à l'issue de l'étape (iii) à une opération de filtration (étape (iv)).

On obtient ainsi un gâteau de filtration et un filtrat.

L'opération de filtration est une technique bien connue de l'homme du métier.

Elle est effectuée au moyen de tout filtre adéquat. On utilisera de préférence un dispositif simple (au niveau de sa conception et de son entretien) et économique du point de vue énergétique, par exemple un filtre de type tambour à toile.

Le gâteau de filtration obtenu à l'issue de l'étape (iv) de filtration est de préférence, notamment dans le cas du traitement de déjections organiques comme les lisiers d'animaux (en particulier le lisier de porc), constitué de boues contenant tout le phosphore éventuellement présents initialement dans le milieu à traiter, boues qui sont directement épandables, c'est-à-dire utilisables telles quelles comme amendement agricole, et ce sans problème d'odeur. De préférence, la quantité d'azote sous forme ammoniacale présente dans lesdites boues est très réduite par rapport à celle présente dans le milieu initial à traiter.

Le filtrat obtenu à l'issue de l'étape (iv) est, au contraire, avantageusement soumis à une opération d'ultrafiltration (étape (v)).

On obtient alors un rétentat (ou concentrat) et un ultrafiltrat (ou perméat).

L'opération d'ultrafiltration est une technique bien connue de l'homme du métier et fait partie des techniques séparatives à membranes dont la force motrice du transfert est un gradient de pression.

Elle est ici effectuée au moyen de tout dispositif d'ultrafiltration adéquat.

L'ultrafiltration employée dans la présente invention peut être frontale ou, de préférence, tangentielle. Dans ce dernier cas, le principe de fonctionnement consiste en général à faire circuler sous pression l'effluent à traiter le long d'une membrane perméable au solvant mais imperméable aux solutés que l'on souhaite retenir.

La membrane employée pour effectuer l'opération d'ultrafiltration dans le procédé selon l'invention peut être organique ou inorganique.

Elle peut être homogène, asymétrique ou composite. Une membrane est dite asymétrique lorsque la couche permsélective ne représente qu'une très fine épaisseur de la membrane ; par opposition, la membrane homogène constitue dans son ensemble la couche permsélective ; un cas particulier de membrane asymétrique est la membrane composite obtenue en déposant la couche permsélective sur un support préexistant.

La configuration de la membrane employée est par exemple multicanale ou, de préférence, tubulaire ou plane.

Son seuil de coupure est en général compris entre 0,001 et 0,2 µm.

On peut employer comme membrane dans le cadre de l'invention notamment une membrane en zircone déposée sur un support en alumine ou, de préférence, en carbone (par exemple de seuil de coupure de 0,14 µm) ou une membrane en carbone déposée sur un support à base de fibres de carbone.

On peut également employer une membrane à base de polyacrylonitriles.

L'utilisation d'une membrane inorganique déposée sur un support céramique peut être envisagée.

On peut ainsi utiliser une membrane inorganique d'ultrafiltration telle que décrite dans la demande de brevet français n° 92/09138.

La Demanderesse a constaté que l'ultrafiltrat (ou perméat) obtenu à l'issue de l'étape (v) d'ultrafiltration est inodore et également stérile, limpide et très pauvre en DBO et DCO.

Par conséquent, cet ultrafiltrat peut être non seulement envoyé dans des stations d'épuration de l'eau mais également directement rejeté dans le milieu naturel : il peut être versé dans des cours d'eau ou utilisé pour irriguer les cultures ; une partie de cet ultrafiltrat peut éventuellement être recyclée vers l'étape (iii).

Le rétentat (ou concentrat) obtenu à l'issue de l'étape (v) d'ultrafiltration est, de préférence, recyclé vers l'étape (i).

Ainsi, aucun déchet non valorisé ne subsiste à l'issue de cette variante du procédé selon l'invention.

Le procédé selon l'invention peut être effectué en continu.

Le procédé selon l'invention est utilisé pour épurer les milieux (ou effluents) contenant des lisiers d'animaux, en particulier d'animaux du type bovin, ovin ou porcin, ou de volailles. Il est par exemple avantageusement employé pour le traitement du lisier du porc, et peut être directement mis en oeuvre sur le lieu de l'exploitation agricole concernée.

## Revendications

1. Procédé d'épuration d'un lisier d'animal, dans lequel on soumet ledit lisier aux étapes suivantes :

   (i) traitement à l'aide d'au moins un agent oxydant ;

   (ii) traitement à l'aide d'au moins un agent coagulant minéral ;

   (iii) traitement à l'aide d'au moins un polyélectrolyte,
   et on soumet l'effluent obtenu à l'issue de l'ensemble de ces étapes à une étape (iv) de filtration, ce en quoi on obtient un gâteau de filtration et un filtrat, et en ce qu'on soumet ledit filtrat à une étape (v) d'ultrafiltration, ce en quoi on obtient un rétentat et un ultrafiltrat.

2. Procédé selon la revendication 1, caractérisé en ce que les étapes (i) et (ii) sont effectuées simultanément.

3. Procédé selon la revendication 1, caractérisé en ce que les étapes (ii) et (iii) sont effectuées simultanément.

4. Procédé selon la revendication 1, caractérisé en ce que les étapes (i), (ii) et (iii) sont effectuées simultanément.

5. Procédé selon la revendication 1, comprenant les étapes successives suivantes :

   (i) on traite ledit lisier à l'aide d'au moins un agent oxydant ;

   (ii) on traite l'effluent obtenu à l'issue de l'étape (i) à l'aide d'au moins un agent coagulant minéral ;

   (iii) on traite l'effluent obtenu à l'issue de l'étape (ii) à l'aide d'au moins un polyélectrolyte ;

   (iv) on soumet l'effluent obtenu à l'issue de l'étape (iii) à une filtration, ce en quoi on obtient un gâteau de filtration et un filtrat.

   (v) on soumet le filtrat obtenu à l'issue de l'étape (iv) à une ultrafiltration, ce en quoi on obtient un rétentat et un ultrafiltrat.

6. Procédé selon l'une des revendications 1 à 5, caractérisé en ce que le rétentat obtenu à l'issue de l'étape (v) est recyclé vers l'étape (i).

**7.** Procédé selon l'une des revendications 1 à 6, caractérisé en ce que l'ultrafiltrat obtenu à l'issue de l'étape (v) est directement rejeté dans le milieu naturel.

**8.** Procédé selon l'une des revendications 1 à 7, caractérisé en ce que le gâteau de filtration obtenu à l'issue de l'étape (iv) est constitué de boues directement épandables.

**9.** Procédé selon l'une des revendications 1 à 8, caractérisé en ce que l'agent oxydant est choisi dans le groupe formé par l'oxygène, les dérivés oxygénés, le chlore, les dérivés chlorés, le permanganate de potassium.

**10.** Procédé selon la revendication 9, caractérisé en ce que l'agent oxydant est choisi dans le groupe formé par l'oxygène, l'eau oxygénée, l'ozone, le chlore, le dioxyde de chlore, l'hypochlorite de sodium, l'hypochlorite de calcium, l'hypochlorite de potassium, le chlorite de sodium, le chlorate de sodium, l'eau de javel, le permanganate de potassium.

**11.** Procédé selon l'une des revendications 1 à 10, caractérisé en ce que l'agent oxydant est l'eau de javel.

**12.** Procédé selon l'une des revendications 1 à 11, caractérisé en ce que l'étape (ii) est effectuée sous agitation.

**13.** Procédé selon l'une des revendications 1 à 12, caractérisé en ce que ledit agent coagulant est un agent coagulant du type cationique.

**14.** Procédé selon la revendication 13, caractérisé en ce que ledit agent coagulant est un sel de fer, un sel d'aluminium ou un sel de magnésium.

**15.** Procédé selon la revendication 14, caractérisé en ce que ledit agent coagulant est un sel de fer répondant à la formule (1) suivante :

$$Fe_2Cl_x(SO_4)_y \qquad (1)$$

dans laquelle $0 \leq x \leq 6$, $0 \leq y \leq 3$ et $x + 2y = 6$
ou un sel d'aluminium répondant à la formule (2) suivante :

$$Al_2(OH)_aCl_b(SO_4)_c \qquad (2)$$

dans laquelle $0 \leq a \leq 5$, $0 \leq b \leq 6$, $0 \leq c \leq 3$ et $a + b + 2c = 6$ .

**16.** Procédé selon la revendication 13, caractérisé en ce que ledit agent coagulant est choisi dans le groupe formé par le chlorure ferreux, le sulfate ferreux, le chlorure ferrique, le sulfate ferrique, le chlorosulfate ferrique, les sulfates d'aluminium basiques, les chlorosulfates d'aluminium basiques, le chlorure de magnésium, le sulfate de magnésium.

**17.** Procédé selon l'une des revendications 13 à 16, caractérisé en ce que le traitement de l'étape (ii) est effectué à l'aide d'au moins un agent coagulant du type cationique et d'au moins un polyélectrolyte du type cationique.

**18.** Procédé selon la revendication 17, caractérisé en ce que ledit polyélectrolyte du type cationique est une polyamine neutre ou une polyamine quaternaire.

**19.** Procédé selon l'une des revendications 1 à 12, caractérisé en ce que ledit agent coagulant est un agent coagulant du type anionique.

**20.** Procédé selon la revendication 19, caractérisé en ce que ledit agent coagulant est l'aluminate de sodium ou l'aluminate de calcium.

**21.** Procédé selon l'une des revendications 13 à 20, caractérisé en ce que ledit polyélectrolyte utilisé à l'étape (iii) est un polyélectrolyte du type anionique.

**22.** Procédé selon la revendication 21, caractérisé en ce que ledit polyélectrolyte du type anionique est un polyacrylamide anionique, un polyacrylate, un polyméthacrylate, un polysaccharide, le chitosan ou un polycarboxylate.

**23.** Procédé selon l'une des revendications 19 et 20, caractérisé en ce que ledit polyélectrolyte utilisé à l'étape (iii) est un polyélectrolyte du type cationique.

**24.** Procédé selon la revendication 23, caractérisé en ce que ledit polyélectrolyte du type cationique utilisé à rétape (iii) est une polyamine neutre ou une polyamine quaternaire.

**25.** Procédé selon l'une des revendications 1 à 24, caractérisé en ce que la filtration est effectuée au moyen d'un filtre de type tambour à toile.

**26.** Procédé selon l'une des revendications 1 à 25, caractérisé en ce que l'ultrafiltration consiste en une ultrafiltration tangentielle.

**27.** Procédé selon l'une des revendications 1 à 26, caractérisé en ce que l'ultrafiltration est effectuée au moyen d'une membrane ayant un seuil de coupure compris entre 0,001 et 0,2 µm.

**28.** Procédé selon l'une des revendications 1 à 27, caractérisé en ce que l'ultrafiltration est effectuée au moyen d'une membrane de configuration tubulaire ou plane.

29. Procédé selon l'une des revendications 1 à 28, caractérisé en ce que l'ultrafiltration est effectuée au moyen d'une membrane en zircone déposée sur un support en carbone ou en alumine ou une membrane en carbone déposée sur un support à base de fibres de carbone.

30. Procédé selon l'une des revendications 1 à 28, caractérisé en ce que l'ultrafiltration est effectuée au moyen d'une membrane à base de polyacrylonitriles.

31. Procédé selon l'une des revendications 1 à 27, caractérisé en ce que l'ultrafiltration est effectuée au moyen d'une membrane inorganique déposée sur un support céramique.

32. Application du procédé selon l'une des revendications 1 à 31 au traitement du lisier de porc.

**Claims**

1. A process for purifying liquid animal manure, in which the following steps are carried out on said manure:

   (i) treatment using at least one oxidising agent;
   (ii) treatment using at least one mineral coagulating agent;
   (iii) treatment using at least one polyelectrolyte; and a filtration step (iv) is carried out on the effluent obtained after this set of steps to obtain a filtration cake and a filtrate, and in that an ultrafiltration step (v) is carried out on said filtrate to obtain a retentate and an ultrafiltrate.

2. A process according to claim 1, characterized in that steps (i) and (ii) are carried out simultaneously.

3. A process according to claim 1, characterized in that steps (ii) and (iii) are carried out simultaneously.

4. A process according to claim 1, characterized in that steps (i), (ii) and (iii) are carried out simultaneously.

5. A process according to claim 1, comprising the following successive steps:

   (i) treating said manure using at least one oxidising agent;
   (ii) treating the effluent obtained from step (i) with at least one mineral coagulating agent;
   (iii) treating the effluent obtained from step (ii) using at least one polyelectrolyte;
   (iv) filtering the effluent obtained from step (iii), to obtain a filtration cake and a filtrate;
   (v) ultrafiltering the filtrate obtained from step (iv), to obtain a retentate and an ultrafitrate.

6. A process according to any one of claims 1 to 5, characterized in that the retentate obtained from step (v) is recycled to step (i).

7. A process according to any one of claims 1 to 6, characterized in that the ultrafiltrate obtained from step (v) is directly discharged into the natural environment.

8. A process according to any one of claims 1 to 7, characterized in that the filtration cake obtained from step (iv) is constituted by directly spreadable sludge.

9. A process according to any one of claims 1 to 8, characterized in that the oxidising agent is selected from the group formed by oxygen, oxygen-containing derivatives, chlorine, chlorine-containing derivatives and potassium permanganate.

10. A process according to claim 9, characterized in that the oxidising agent is selected from the group formed by oxygen, hydrogen peroxide, ozone, chlorine, chlorine dioxide, sodium hypochlorite, calcium hypochlorite, potassium hypochlorite, sodium chlorite, sodium chlorate, Javel water and potassium permanganate.

11. A process according to any one of claims 1 to 10, characterized in that the oxidising agent is Javel water.

12. A process according to any one of claims 1 to 11, characterized in that step (ii) is carried out with stirring.

13. A process according to any one of claims 1 to 12, characterized in that said coagulating agent is a cationic type coagulating agent.

14. A process according to claim 13, characterized in that said coagulating agent is an iron salt, an aluminium salt or a magnesium salt.

15. A process according to claim 14, characterized in that said coagulating agent is an iron salt with the following formula (1):

$$Fe_2Cl_x(SO_4)_y \qquad (1)$$

where $0 \leq x \leq 6$; $0 \leq y \leq 3$; $x + 2y = 6$

or an aluminium salt with the following formula (2):

$$Al_2(OH)_aCl_b(SO_4)_c \qquad (2)$$

where $0 \leq a \leq 5$; $0 \leq b \leq 6$; $0 \leq c \leq 3$; and $a + b + 2c = 6$.

16. A process according to claim 13, characterized in that said coagulating agent is selected from the group formed by ferrous chloride, ferrous sulphate, ferric chloride, ferric sulphate, ferric chlorosulphate, basic aluminium sulphates, basic aluminium chlorosulphates, magnesium chloride and magnesium sulphate.

17. A process according to any one of claims 13 to 16, characterized in that the treatment of step (ii) is carried out using at least one cationic type coagulating agent and at least one cationic type polyelectrolyte.

18. A process according to claim 17, characterized in that said cationic type polyelectrolyte is a neutral polyamine or a quaternary polyamine.

19. A process according to any one of claims 1 to 12, characterized in that said coagulating agent is an anionic type coagulating agent.

20. A process according to claim 19, characterized in that said coagulating agent is sodium aluminate or calcium aluminate.

21. A process according to any one of claims 13 to 20, characterized in that said polyelectrolyte used in step (iii) is an anionic type polyelectrolyte.

22. A process according to claim 21, characterized in that said anionic type polyelectrolyte is an anionic polyacrylamide, a polyacrylate, a polymethacrylate, a polysaccharide, chitosan or a polycarboxylate.

23. A process according to claim 19 or claim 20, characterized in that said polyelectrolyte used in step (iii) is a cationic type polyelectrolyte.

24. A process according to claim 23, characterized in that said cationic type polyelectrolyte used in step (iii) is a neutral polyamine or a quaternary polyamine.

25. A process according to any one of claims 1 to 24, characterized in that filtration is carried out using a rotary strainer type filter.

26. A process according to any one of claims 1 to 25, characterized in that ultrafiltration consists of tangential ultrafiltration.

27. A process according to any one of claims 1 to 26, characterized in that ultrafilitration is carried out using a membrane with a cut-off threshold in the range 0.001 to 0.2 μm.

28. A process according to any one of claims 1 to 27, characterized in that ultrafilitration is carried out using a membrane with a tubular or planar configuration.

29. A process according to any one of claims 1 to 28, characterized in that ultrafiltration is carried out using a zirconia membrane deposited on a carbon or alumina support or a carbon membrane deposited on a support based on carbon fibres.

30. A process according to any one of claims 1 to 28, characterized in that ultrafiltration is carried out using a membrane based on polyacrylonitriles.

31. A process according to any one of claims 1 to 27, characterized in that ultrafilitration is carried out using an inorganic membrane deposited on a ceramic support.

32. Application of the process according to any one of claims 1 to 31 to treating liquid pig manure.

**Patentansprüche**

1. Verfahren zur Aufbereitung von tierischer Gülle, in dem man die Gülle den folgenden Schritten unterwirft:

    (i) Behandlung mittels mindestens eines Oxidationsmittels;
    (ii) Behandlung mittels mindestens eines anorganischen Koagulationsmittels;
    (iii) Behandlung mittels mindestens eines Polyelektrolyts;
    und man den am Ende der Gesamtheit dieser Schritte erhaltenen Effluent einem Filtrationsschritt (iv) unterwirft, wonach man einen Filterkuchen und ein Filtrat erhält, und dadurch, daß man das Filtrat einem Ultrafiltrationsschritt (v) unterwirft, wonach man ein Retentat und ein Ultrafiltrat erhält.

2. Verfahren nach Anspruch 1, dadurch gekennzeichnet, daß die Schritte (i) und (ii) gleichzeitig ausgeführt werden.

3. Verfahren nach Anspruch 1, dadurch gekennzeichnet, daß die Schritte (ii) und (iii) gleichzeitig ausgeführt werden.

4. Verfahren nach Anspruch 1, dadurch gekennzeichnet, daß die Schritte (i), (ii) und (iii) gleichzeitig ausgeführt werden.

5. Verfahren nach Anspruch 1, das die folgenden aufeinanderfolgenden Schritte umfaßt:

(i) man behandelt die Gülle mittels mindestens eines Oxidationsmittels;
(ii) man behandelt den am Ende des Schritts (i) erhaltenen Effluent mittels mindestens eines anorganischen Koagulationsmittels;
(iii) man behandelt den am Ende des Schritts (ii) erhaltenen Effluent mittels mindestens eines Polyelektrolyts;
(iv) man unterwirft den am Ende des Schritts (iii) erhaltenen Effluent einer Filtration, wonach man einen Filterkuchen und ein Filtrat erhält;
(v) man unterwirft das am Ende des Schritts (iv) erhaltene Filtrat einer Ultrafiltration, wonach man ein Retentat und ein Ultrafiltrat erhält.

6. Verfahren nach einem der Ansprüche 1 bis 5, dadurch gekennzeichnet, daß das am Ende des Schritts (v) erhaltene Retentat zu dem Schritt (i) zurückgeführt wird.

7. Verfahren nach einem der Ansprüche 1 bis 6, dadurch gekennzeichnet, daß das am Ende des Schritts (v) erhaltene Ultrafiltrat direkt in die natürliche Umgebung ausgeschieden wird.

8. Verfahren nach einem der Ansprüche 1 bis 7, dadurch gekennzeichnet, daß der am Ende des Schritts (iv) erhaltene Filterkuchen aus direkt ausbringbaren Schlämmen gebildet wird.

9. Verfahren nach einem der Ansprüche 1 bis 8, dadurch gekennzeichnet, daß das Oxidationsmittel in der Gruppe, gebildet aus Sauerstoff, den sauerstoffhaltigen Derivaten, Chlor, den chlorhaltigen Derivaten, Kaliumpermanganat, ausgewählt wird.

10. Verfahren nach Anspruch 9, dadurch gekennzeichnet, daß das Oxidationsmittel in der Gruppe, gebildet aus Sauerstoff, Wasserstoffsuperoxid, Ozon, Chlor, Chlordioxid, Natriumhypochlorit, Calciumhypochlorit, Kaliumhypochlorit, Natriumchlorit, Natriumchlorat, Javelscher Lauge, Kaliumpermanganat, ausgewählt wird.

11. Verfahren nach einem der Ansprüche 1 bis 10, dadurch gekennzeichnet, daß das Oxidationsmittel Javelsche Lauge ist.

12. Verfahren nach einem der Ansprüche 1 bis 11, dadurch gekennzeichnet, daß der Schritt (ii) unter Bewegung ausgeführt wird.

13. Verfahren nach einem der Ansprüche 1 bis 12, dadurch gekennzeichnet, daß das Koagulationsmittel ein Koagulationsmittel des kationischen Typs ist.

14. Verfahren nach Anspruch 13, dadurch gekennzeichnet, daß das Koagulationsmittel ein Eisensalz, ein Aluminiumsalz oder ein Magnesiumsalz ist.

15. Verfahren nach Anspruch 14, dadurch gekennzeichnet, daß das Koagulationsmittel ein Eisensalz, das der folgenden Formel (1):

$$Fe_2Cl_x(SO_4)_y \qquad (1),$$

in der $0 \le x \le 6$, $0 \le y \le 3$ und $x + 2y = 6$, entspricht, oder ein Aluminiumsalz, das der folgenden Formel (2):

$$Al_2(OH)_aCl_b(SO_4)_c \qquad (2),$$

in der $0 \le a \le 5$, $0 \le b \le 6$, $0 \le c \le 3$ und $a + b + 2c = 6$, entspricht, ist.

16. Verfahren nach Anspruch 13, dadurch gekennzeichnet, daß das Koagulationsmittel in der Gruppe, gebildet aus Eisen(II)-chlorid, Eisen(II)-sulfat, Eisen(III)-chlorid, Eisen(III)-sulfat, Eisen(III)-chlorsulfat, den basischen Aluminiumsulfaten, den basischen Aluminiumchlorsulfaten, Magnesiumchlorid, Magnesiumsulfat, ausgewählt wird.

17. Verfahren nach einem der Ansprüche 13 bis 16, dadurch gekennzeichnet, daß die Behandlung des Schritts (ii) mittels mindestens eines Koagulationsmittels des kationischen Typs und mindestens eines Polyelektrolyts des kationischen Typs ausgeführt wird.

18. Verfahren nach Anspruch 17, dadurch gekennzeichnet, daß der Polyelektrolyt des kationischen Typs ein neutrales Polyamin oder ein quaternäres Polyamin ist.

19. Verfahren nach einem der Ansprüche 1 bis 12, dadurch gekennzeichnet, daß das Koagulationsmittel ein Koagulationsmittel des anionischen Typs ist.

20. Verfahren nach Anspruch 19, dadurch gekennzeichnet, daß das Koagulationsmittel Natriumaluminat oder Calciumaluminat ist.

21. Verfahren nach einem der Ansprüche 13 bis 20, dadurch gekennzeichnet, daß der in dem Schritt (iii) verwendete Polyelektrolyt ein Polyelektrolyt des anionischen Typs ist.

22. Verfahren nach Anspruch 21, dadurch gekennzeichnet, daß der Polyelektrolyt des anionischen Typs ein anionisches Polyacrylamid, ein Polyacrylat, ein Polymethacrylat, ein Polysaccharid, Chitosan oder ein Polycarboxylat ist.

23. Verfahren nach einem der Ansprüche 19 und 20, dadurch gekennzeichnet, daß der in dem Schritt (iii) verwendete Polyelektrolyt ein Polyelektrolyt des kationischen Typs ist.

24. Verfahren nach Anspruch 23, dadurch gekennzeichnet, daß der in dem Schritt (iii) verwendete Polyelektrolyt des kationischen Typs ein neutrales Polyamin oder ein quaternäres Polyamin ist.

25. Verfahren nach einem der Ansprüche 1 bis 24, dadurch gekennzeichnet, daß die Filtration mittels eines Filters vom Typ Gewebetrommelfilter ausgeführt wird.

26. Verfahren nach einem der Ansprüche 1 bis 25, dadurch gekennzeichnet, daß die Ultrafiltration in einer tangentialen Ultrafiltration besteht.

27. Verfahren nach einem der Ansprüche 1 bis 26, dadurch gekennzeichnet, daß die Ultrafiltration mittels einer Membran bewirkt wird, die einen Cut-off- oder Rückhaltevermögen-Schwellenwert zwischen 0,001 und 0,2 µm aufweist.

28. Verfahren nach einem der Ansprüche 1 bis 27, dadurch gekennzeichnet, daß die Ultrafiltration mittels einer Membran von röhrenförmiger oder ebener Konfiguration bewirkt wird.

29. Verfahren nach einem der Ansprüche 1 bis 28, dadurch gekennzeichnet, daß die Ultrafiltration mittels einer Zirconiumdioxidmembran, die auf einem Kohlenstoff- oder Aluminiumoxidträger abgeschieden ist, oder einer Kohlenstoffmembran, die auf einem Träger auf Basis von Kohlenstofffasern abgeschieden ist, bewirkt wird.

30. Verfahren nach einem der Ansprüche 1 bis 28, dadurch gekennzeichnet, daß die Ultrafiltration mittels einer Membran auf Basis von Polyacrylnitrilen bewirkt wird.

31. Verfahren nach einem der Ansprüche 1 bis 27, dadurch gekennzeichnet, daß die Ultrafiltration mittels einer anorganischen Membran, die auf einem Keramikträger abgeschieden ist, bewirkt wird.

32. Anwendung des Verfahrens nach einem der Ansprüche 1 bis 31 auf die Behandlung von Schweinegülle.